# EUROPÄISCHE PATENTSCHRIFT

(11) **EP 2 271 883 B1**
(45) Veröffentlichungstag und Bekanntmachung des Hinweises auf die Patenterteilung: **11.07.2012**
(21) Anmeldenummer: 09733530.1
(22) Anmeldetag: 08.04.2009
(51) Int. Cl.: A47B 57/06, F16F 7/08, F25D 25/02

(54) **KÄLTEGERÄT MIT HÖHENVERSTELLBAREM ABSTELLER**
REFRIGERATING APPLIANCE WITH A HEIGHT-ADJUSTABLE STORAGE DEVICE
APPAREIL FRIGORIFIQUE DOTÉ D'UN DISPOSITIF DE PLACEMENT AJUSTABLE EN HAUTEUR

(30) Priorität: 17.04.2008 DE 102008019385
(43) Veröffentlichungstag der Anmeldung: 12.01.2011
(73) Patentinhaber: BSH Bosch und Siemens Hausgeräte GmbH, 81739 München (DE)
(72) Erfinder: BENITSCH, Roland, 89564 Nattheim (DE); POIDINGER, Albert, 89567 Sontheim (DE)
(86) Internationale Anmeldenummer: PCT/EP2009/054227
(87) Internationale Veröffentlichungsnummer: WO 2009/127575

(56) Entgegenhaltungen:
- DE-A1-102006 014 370
- JP-A- 11 206 477
- US-A- 6 065 821
- US-A1- 2005 062 380

## Beschreibung

Die vorliegende Erfindung betrifft ein Kältegerät mit einem einen Innenraum umschließenden Gehäuse und einem Absteller, der in dem Innenraum durch ein Getriebe zwischen einer hohen und einer niedrigen Stellung verstellbar geführt ist. Ein solches Kältegerät ist aus DE 10 2006 014 370 A1 bekannt.

Mit Hilfe des Getriebes wird sichergestellt, dass der Absteller auch während einer Bewegung zwischen der hohen und der niedrigen Stellung eine horizontale Orientierung beibehält, so dass der Absteller verstellt werden kann, ohne das Gleichgewicht von darauf abgestellte Gegenständen zu gefährden. Ein Problem kann sich jedoch daraus ergeben, dass ein Benutzer beim Absenken des Abstellers zunächst nur eine geringe Kraft aufwenden muss, diese aber - bedingt durch den Weg, auf dem das Getriebe den Absteller führt - im Laufe der Bewegung des Abstellers stark zunimmt, bis hin zu einer Zwischenstellung, in der der Benutzer das gesamte Gewicht des Abstellers und der darauf befindlichen Gegenstände ausgleichen muss. Wenn er hiervon überrascht wird und den Absteller versehentlich loslässt, schlägt dieser in der niedrigen Stellung an, so dass dennoch die Gefahr besteht, dass Gegenstände umfallen.

Des Weiteren fehlt es an einer Kopplung zwischen den zwei Getriebeteilen, die den Absteller an verschiedenen Seitenwänden des Gehäuses abstützen. Daher ist eine Fehlfunktion nicht ausgeschlossen, bei der der Absteller von einem der Getriebeteil in der hohen Stellung und von dem anderen in der niedrigen Stellung unterstützt wird. Das heißt, der Absteller gerät in Seitwärtsschieflage, so dass darauf abgestellt Gegenstände zur Seite wegrutschen oder umfallen können.

Die Patentschrift US 6,065,821 zeigt ein Kältegerät mit einer Regalanordnung umfassend zwei Schienen und einen vertikal verstellbaren Regalboden. Hierbei ist ein Bremselement vorgesehen, welches ein Verkippen des Regalbodens verhindern soll.

Die Offenlegungsschrift US 2005/0062380 A1 zeigt einen Innenraum eines Kältegeräts mit einem höhenverstellbaren Regalboden, welches mittels eines Zahnrads, welches in eine Zahnradschiene des Innenraums eingreift, höhenverstellt werden kann. Hierbei ist eine Stoppvorrichtung vorgesehen, welche in einen Zwischenraum der Zähne des Zahnrads eingreifen kann, so dass eine Rotation des Zahnrads verhindert wird.

Die Offenlegungsschrift JP 11 206 477 zeigt einen Schrank, wobei in einem Innenraum des Schranks eine mittels eines Motors höhenverstellbare Box angeordnet ist.

Aufgabe der vorliegenden Erfindung ist, ein Kältegerät der eingangs angegeben Art so weiterzuentwickeln, dass Zwischenfälle beim Verstellen des Abstellers mit höherer Sicherheit ausgeschlossen sind, ohne dass dadurch der Bedienkomfort der Höhenverstellung beeinträchtigt wird.

Die Aufgabe wird gelöst, indem dem Getriebe eine die Bewegung des Abstellers von der hohen in die niedrige Stellung selektiv dämpfende Bremse zugeordnet ist, wobei die Bremse bei einer Aufwärtsbewegung des Abstellers nicht wirksam ist.

Die Bremskraft dieser Bremse ist zweckmäßigerweise so eingestellt, dass sie bei normaler Beladung eine Bewegung des Abstellers in die niedrige Stellung stark genug verzögert, um ein abruptes Anschlagen in der niedrigen Stellung zu verhindern, ohne dass dafür der Benutzer den Absteller während seiner Bewegung unterstützen muss. Da die Bremse bei einer Aufwärtsbewegung des Abstellers nicht wirksam ist, ist diese für den Benutzer nicht anstrengender als bei dem herkömmlichen Kältegerät.

Als selektiv wirkende Bremsen sind insbesondere hydraulische oder pneumatische Dämpfer bekannt, bei denen ein Fluid durch eine von außen angetriebene Bewegung zwischen zwei Kammern umgewälzt wird und dabei bei einer Bewegungsrichtung ein leicht durchlässiges Rückschlagventil und bei der entgegengesetzten Bewegungsrichtung einen Engpass passiert. Erfindungsgemäß ist jedoch eine preiswertere Lösung bevorzugt, bei der die Bremse als Reibbremse ausgeführt ist.

Vorzugsweise umfasst diese Reibbremse einen ersten Bremskörper und einen reibend über den ersten Bremskörper bewegbaren zweiten Bremskörper, der durch einen Stellkörper des Getriebes zwischen zwei Stellungen mit unterschiedlich starker Reibung, vorzugsweise einer Stellung in Reibkontakt mit dem ersten Bremskörper und einer Stellung ohne Reibkontakt mit dem ersten Bremskörper, verstellbar ist.

Zweckmäßigerweise ist der Stellkörper an den Absteller gekoppelt bewegbar, um bei einer Bewegung des Abstellers in die niedrige Stellung den starken Reibkontakt und bei einer Bewegung des Abstellers in die hohe Stellung keinen Reibkontakt herzustellen.

Einer bevorzugten Ausgestaltung zufolge umfasst das Getriebe ein mit dem Gehäuse und dem Absteller verbundenes, die Bewegung des Abstellers führendes Element, der Stellkörper ist in Bezug auf am Gehäuse feste Anschläge zwischen einer ersten und einer zweiten Anschlagstellung bewegbar, wobei die Bewegungsfreiheit des Stellkörpers zwischen den Anschlagstellungen kleiner ist als die Bewegungsfreiheit des Elements, so dass der Stellkörper zwangsläufig auf einem Teil der Bewegung des Elements von diesem mitgenommen wird, und der Stellkörper ist in Bezug auf das Element in einer schwachem Reibkontakt entsprechenden Stellung und einer dem starken Reibkontakt entsprechenden Stellung verrastbar ist, so dass sich je nach Stellung des Stellkörpers in Bezug zu dem Element ein unterschiedlich starker Reibkontakt ergibt.

Vorzugsweise ist das Element zwischen der oberen und der unteren Stellung des Abstellers drehbar.

Bevorzugt ist ferner, dass einer der Bremskörper eine kreisbogenförmige Feder ist, so dass der andere Bremskörper auf seiner von dem Element geführten kreisbogenförmigen Bahn entlang einer Umfangsfläche der Feder bewegbar ist.

Die Feder ist vorzugsweise an wenigstens einem Ende mit einem die Bewegungsfreiheit des anderen Bremskörpers begrenzenden Anschlag versehen.

An einem Ende der Feder kann alternativ oder ergänzend zu dem Anschlag auch eine Rastaussparung vorgesehen sein, in der der andere Bremskörper verrastbar ist, um den Absteller in seiner hohen oder niedrigen Stellung zu stabilisieren.

Um als Bremse richtungsselektiv wirksam zu sein, trägt die Feder vorzugsweise an einer von dem anderen Bremskörper abgewandten Umfangsfläche einen Vorsprung, der von dem Stellkörper in seiner zweiten Anschlagstellung abgestützt ist und so die Feder in die Bahn des anderen Bremskörpers hineindrückt oder dafür sorgt, dass die Feder dem Druck des anderen Bremskörpers nicht nachgeben kann.

Die zwei Raststellungen können realisiert sein mit Hilfe einer bogenförmigen Feder des Stellkörpers, die zu dessen Drehachse konzentrisch verläuft und zwei Anschlagflächen aufweist, deren Kontakt mit einem Rastvorsprung des Elements die zwei Raststellungen definiert.

Um die Bremse vor Beschädigung oder Verunreinigung zu schützen, kann vorteilhafterweise das mit Gehäuse und Absteller drehbar verbundene Element als ein hohles Rad ausgebildet sein, in dessen Innerem die Bremskörper und der Stellkörper untergebracht sind.

Einer alternativen Ausgestaltung zufolge kann die Bremse ein die Lageenergie des Abstellers beim Übergang in die niedrige Stellung speicherndes und sie beim Übergang in die hohe Stellung freisetzendes Element umfassen.

Um die Bewegung des Abstellers kippsicher zu führen, sind vorzugsweise mehrere mit Gehäuse und Absteller drehbar verbundene Elemente untereinander drehgekoppelt.

Zwischen Elementen, die an einer gleichen Seitenwand des Gehäuses angreifen, kann die Drehkopplung über einen Riemen hergestellt sein.

Bei Elementen, die an entgegengesetzten Seitenwänden des Gehäuses angreifen, ist die Kopplung vorzugsweise durch eine sie verbindende Stange realisiert.

Die Stange verläuft vorteilhafterweise Platz sparend entlang der Drehachse, an der die zwei durch sie verbundenen drehbaren Elemente an den Absteller angelenkt sind.

Weitere Vorteile der Erfindung ergeben sich aus der nachfolgenden Beschreibung von Ausführungsbeispielen unter Bezugnahme auf die beigefügten Figuren. Es zeigen:
- Fig. 1: eine perspektivische Teilansicht eines Abstellers und seiner Halterung in hoher Stellung;
- Fig. 2: eine Teilansicht des Abstellers in niedriger Stellung;
- Fig. 3: eine Teilansicht eines den Absteller stützenden Getriebeteils mit entferntem Rad;
- Fig. 4: eine Innenansicht des Getriebeteils aus zur Perspektive der Fig. 3 entgegen gesetzter Richtung;
- Fig. 5: einen Teilschnitt des Getriebeteils in hoher Stellung;
- Fig. 6: ein Zwischenstadium des Getriebeteils auf dem Weg in die niedrige Stellung;
- Fig. 7: ein zweites Zwischenstadium des Getriebeteils auf dem Weg in die niedrige Stellung;
- Fig. 8: das Getriebeteil in in der niedrigen Stellung verrastetem Zustand;
- Fig. 9: das Getriebeteil nach Lösen der Verrastung;
- Fig. 10: ein erstes Zwischenstadium des Getriebeteils auf dem Weg in die hohe Stellung;
- Fig. 11: ein zweites Zwischenstadium auf dem Weg in die hohe Stellung;
- Fig. 12: ein Getriebeteil gemäß einer zweiten Ausgestaltung der Erfindung, das einen Absteller in hoher Stellung hält, und
- Fig. 13: das Getriebeteil der Fig. 12 mit dem Absteller in niedriger Stellung.

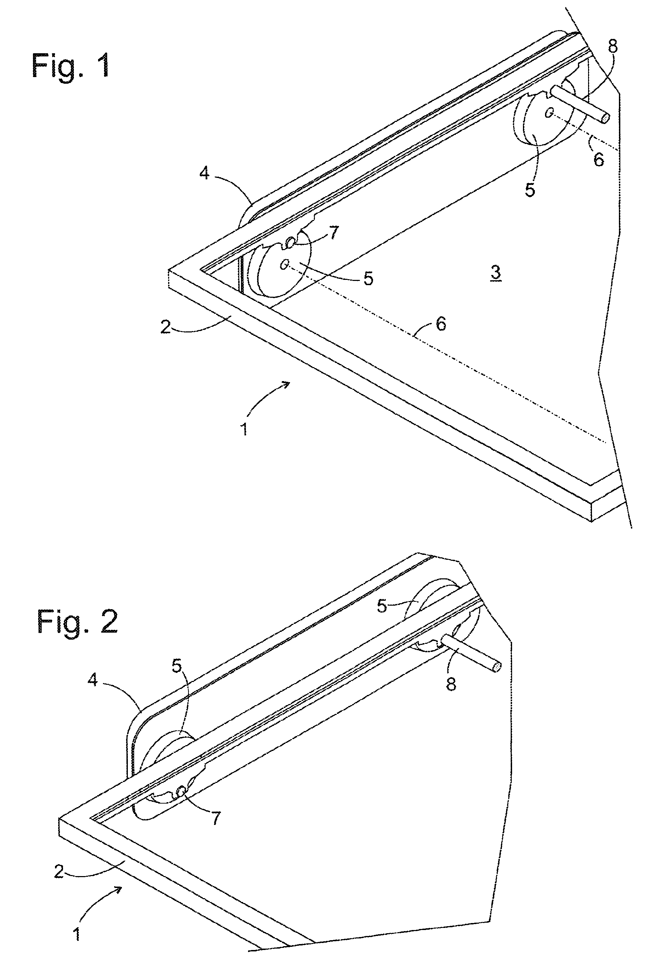

Fig. 1 zeigt in einer perspektivischen Teilansicht einen Absteller 1, hier in Form einer von einem Rahmen 2 umgebenen Glasplatte 3, der mit Hilfe zweier ihn jeweils an einem Rand unterstützender Getriebeteile 4 zwischen einer in Fig. 1 gezeigten hohen Stellung und einer in Fig. 2 gezeigten niedrigen Stellung verstellbar ist. Das in der Fig. gezeigte Getriebeteil 4 umfasst ein flaches Gehäuse, das vorgesehen ist, um in einer Aussparung in einer Seitenwand eines Kältegerätegehäuses montiert zu werden. Der in der Figur nicht gezeigte gegenüberliegende Rand des Rahmens 2 ist durch ein nicht dargestelltes, zu dem Getriebeteil 4 spiegelbildliches Getriebeteil unterstützt.

Von dem flach quaderförmigen Gehäuse des Getriebeteils 4 stehen zwei Räder 5 in den Innenraum des Kältegerätegehäuses vor. Die Räder 5 sind in Bezug auf das Getriebegehäuse um eine Achse 6 drehbar und tragen exzentrisch zu der Achse 6 jeweils einen Zapfen 7, an dem der Rahmen 2 verklammert ist. An den der Rückwand des Kältegerätegehäuses benachbarten Rädern 5 der beiden Getriebeteile 4 sind die Zapfen 7 zu einer die Räder 5 starr verbindenden Stange 8 verlängert und verschmolzen, um die Drehung der Räder 5 aneinander zu koppeln. Rückwandnahe und türnahe Räder 5 eines Getriebeteils 4 sind jeweils durch einen im Inneren von dessen Gehäuse geführten und deshalb in Fig. 1, 2 nicht sichtbaren, in einen Zahnkranz der Räder 5 eingreifenden Zahnriemen gekoppelt. Die Kopplung aller vier Räder 5 gewährleistet, dass beim Verstellen des Abstellers 1 zwischen seiner hohen und niedrigen Stellung alle Räder 5 exakt synchron rotieren, so dass die horizontale Orientierung des Abstellers 1 jederzeit sichergestellt ist.

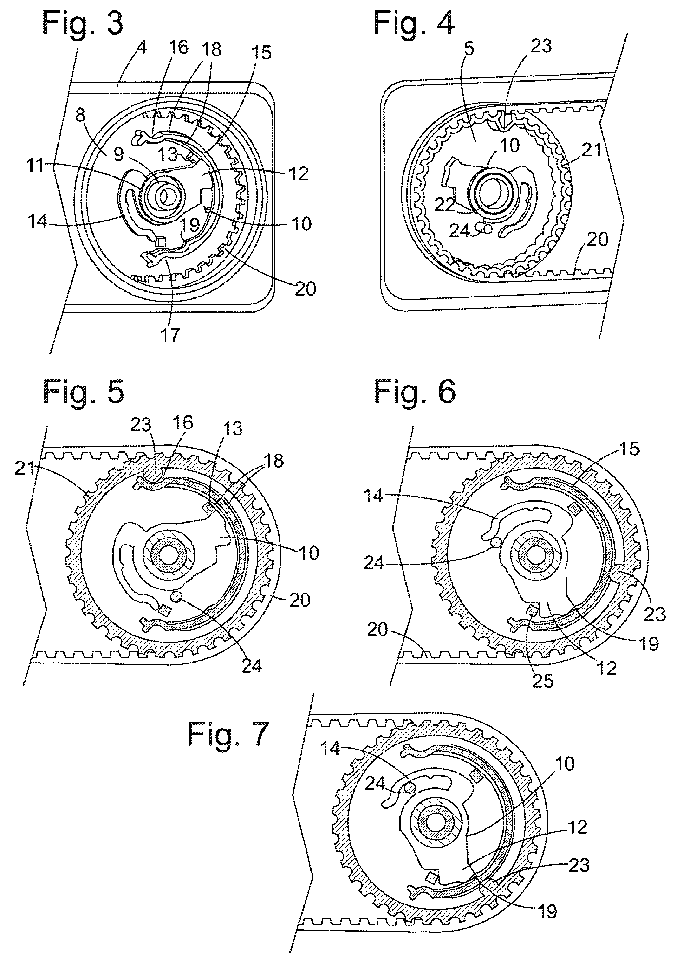

Fig. 3 zeigt eine Teilansicht eines der Getriebeteile 4, wobei ein Rad 5 weggelassen ist, um durch eine normalerweise von dem Rad 5 verschlossene Öffnung des Gehäuses des Getriebeteils 4 einen Einblick in dessen Inneres zu gewähren. Von der durch die Öffnung hindurch sichtbaren Rückwand 8 des Getriebegehäuses steht zentral eine Lagerbuchse 9 ab, auf die normalerweise eine hohle Welle des Rades 5 drehbar aufgeschoben ist. Die Lagerbuchse 9 und die (hier nicht gezeigte) hohle Welle sind umgeben von einem drehbaren Stellkörper 10. Von einem zentralen Ring 11 des Stellkörpers 10 steht ein Anschlagarm 12 radial ab. Der Anschlagarm 12 ist in einer Anschlagstellung dargestellt, in der er an einem ersten Vorsprung 13 der Rückwand 8 anliegt.

Ein zu der Lagerbuchse konzentrischer kreisbogenförmiger Federarm 14 ist dem Anschlagarm 12 gegenüberliegend mit dem Ring 11 verbunden.

Eine von der Rückwand 8 abstehende halbkreisförmige Rippe 15 ist auf die Lagerbuchse 9 zentriert. An den Enden der Rippe 15 befinden sich nach außen konkav gekrümmte Rastaussparungen 16, 17. Die Rippe 15 ist in Höhe der Rastaussparungen 16, 17 einstückig mit der Rückwand 8 verbunden; in ihrem mittleren Abschnitt ist sie von der Rückwand beiderseits durch einen schmalen Spalt 18 getrennt, um einem in radialer Richtung auf sie wirkenden Druck elastisch nachgeben zu können. Ein radial nach innen gerichteter Vorsprung 19 ist in einem unteren Bereich der Rippe 15 an deren Innenseite gebildet.

Um die Rippe 15 herum ist ein Zahnriemen 20 zu sehen, der in vollständig zusammengebautem Zustand beide Räder 5 des Getriebeteils 4 umschlingt und mit Zähnen dieser Räder 5 kämmt, um ihre Drehungen aneinander zu koppeln.

Fig. 4 zeigt eine Teilansicht des Getriebeteils 4, gesehen von der Seite der (in der Figur weggelassenen) Rückwand 8 her. Man erkennt einen Zahnkranz 21 des Rades 5, in den der Zahnriemen 20 eingreift, und eine zentrale Hülse 22 des Rades 5, auf die der Stellkörper 10 drehbar aufgeschoben ist und die ihrerseits vorgesehen ist, um drehbar auf die Lagerbuchse 9 aufgesteckt zu werden. Am Zahnkranz 21 ist ein radial nach innen gerichteter Vorsprung 23 gebildet. Ein Zapfen 24 steht unweit der Hülse 22 ins Innere des Rades 5 vor.

Fig. 5 zeigt in einem Schnitt die Konfiguration des Getriebeteils 4, während sich der Absteller 1 in der hohen Stellung befindet. Der Vorsprung 23 des Zahnkranzes 21 ist in die obere Rastaussparung 16 der Rippe 15 eingerückt. Der Stellkörper 10 befindet sich in einer Anschlagstellung am Vorsprung 13 der Rückwand 8.

Wenn das Rad 5 im Uhrzeigersinn gedreht wird, um den Absteller 1 in die niedrige Stellung zu bringen, gelangt der Zapfen 24 in eine Raststellung, in der er an der einwärts gekrümmten Spitze des Federarms 14 anschlägt. So wird durch die Drehung des Rades 5 der Stellkörper 10 im Uhrzeigersinn mitgenommen. Dadurch gelangt der Anschlagarm 12 des Stellkörpers 10 in Kontakt mit dem Vorsprung 19 an der Innenseite der Rippe 15. In dieser Stellung blockiert ein zweiter Vorsprung 25 der Rückwand 8 die weitere Drehung des Stellkörpers 10, wie in Fig. 6 gezeigt.

Wenn das Rad, wie in Fig. 7 gezeigt, im Uhrzeigersinn weitergedreht wird, lenkt der Zapfen 24 die Spitze des Federarms 14 radial nach außen aus und tritt in eine Aussparung zwischen dem Federarm 14 und dem Ring 11 des Stellkörpers 10 ein. Die Rippe 15 gelangt in Höhe des Vorsprungs 19 in Reibkontakt mit dem Vorsprung 23 des Zahnkranzes. Die Rippe 15 kann so geformt sein, dass dieser Reibkontakt nur zustande kommt, wenn die Rippe durch den Anschlagarm 12 nach außen ausgelenkt ist; sie kann aber auch so geformt sein, dass der Reibkontakt auch in entspannter Konfiguration der Rippe 15 zustande kommt, die Rippe 15 aber dem Druck des Vorsprungs 23 leicht ausweichen kann, wenn der Vorsprung 19 nicht vom Anschlagarm 12 unterstützt ist. Die zwischen dem Vorsprung 23 und der Rippe 15 auftretende Reibung bremst die Abwärtsbewegung des Abstellers 1.

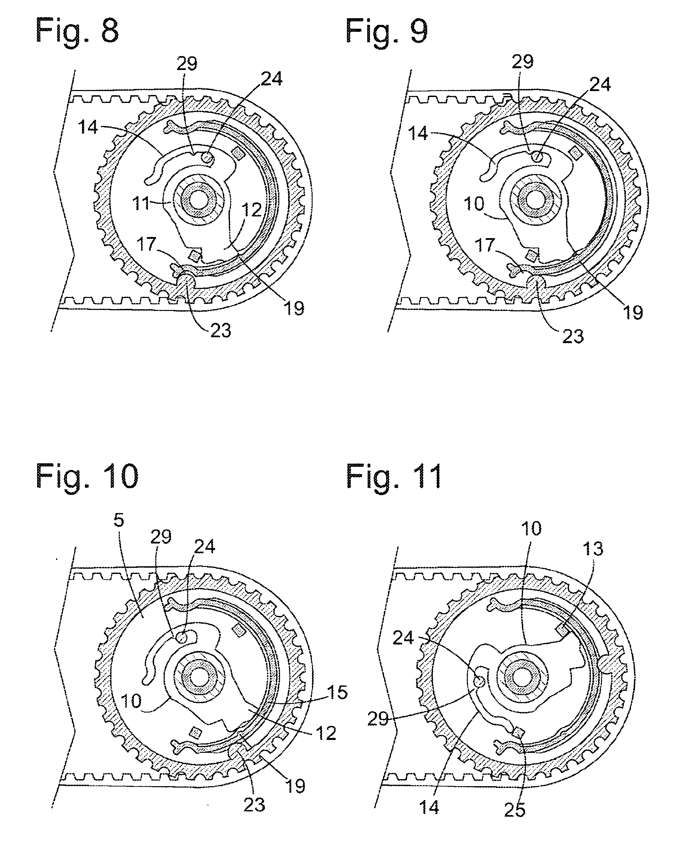

Wenn der Absteller 1 die untere Stellung erreicht hat, befindet sich das Getriebe in der in Fig. 8 gezeigten Konfiguration. Der Stellkörper 10 stützt weiterhin die Rippe 15 radial nach außen hin ab, doch hat der Vorsprung 23 inzwischen den abgestützten Bereich der Rippe 15 passiert und ist in deren untere Rastaussparung 17 eingerastet. Da die Rippe in Höhe der Rastaussparung fest mit der Rückwand 8 verbunden ist, stellt eine Außenseite der Aussparung 17 einen Anschlag dar, den der Vorsprung 23 nicht passieren kann. Der Zapfen 24 des Rades hat das Ende der Aussparung zwischen Federarm 14 und Ring 11 des Stellkörpers erreicht und dabei einen Vorsprung 26 an der Innenseite des Federarms 14 überwunden.

Wenn der Absteller 1 wieder angehoben wird, rotiert das Rad 5 im Gegenuhrzeigersinn. Wie in Fig. 9 gezeigt, rückt zunächst der Vorsprung 23 aus der unteren Rastaussparung 17 wieder aus, und der Zapfen 24 gelangt in eine zweite Raststellung, in der er gegen den Vorsprung 26 des Federarms 14 stößt.

Dadurch wird bei der weiteren Drehung des Rades 5 der Stellkörper 10 mitgenommen, so dass der Anschlagarm 12 vom Vorsprung 19 herunter gleitet. Dieser Zustand ist in Fig. 10 gezeigt. Der Vorsprung 23 bewegt sich nun an der Rippe 15 entlang, ohne diese zu berühren, oder zumindest, ohne stark an ihr zu reiben.

Im Laufe der weiteren Drehung des Rades 5 kommt der Stellkörper 10 wieder in Anschlag an Vorsprung 13, wie in Fig. 11 gezeigt. Damit sich das Rad 5 weiterdrehen kann, muss sein Zapfen 24 nun den Vorsprung 26 des Federarms 14 passieren. So wird schließlich die Konfiguration der Fig. 5 wieder erreicht.

Im einfachsten Falle kann der oben beschriebene Bremsmechanismus an einem der zwei Räder 5 jedes Getriebeteils 4 vorgesehen sein. Zur Erhöhung der Sicherheit kann er auch an beiden Rädern 5 vorgesehen werden.

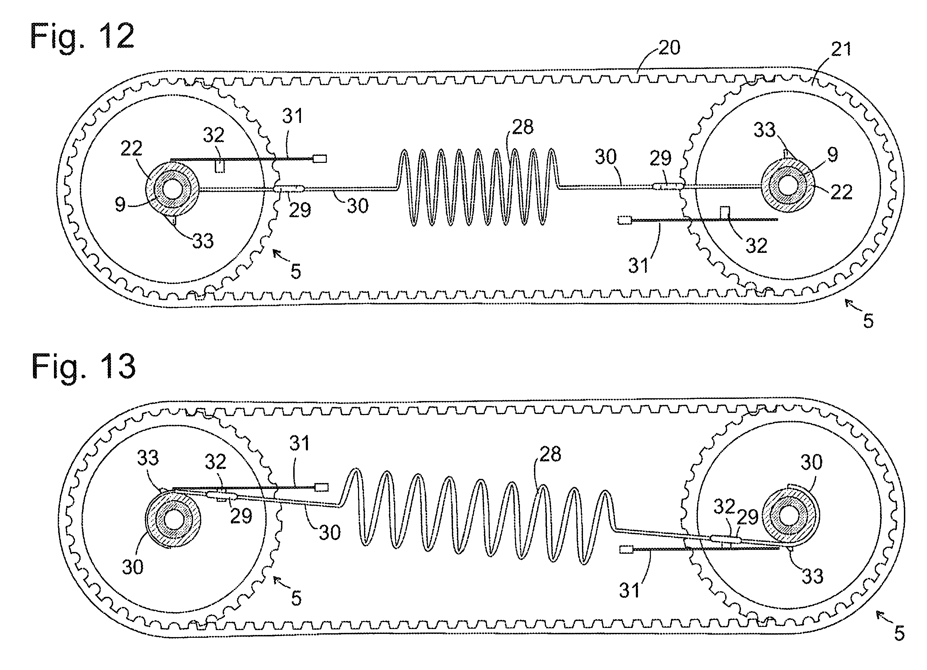

Fig. 12 zeigt einen Schnitt durch ein in eine Seitenwand des Kältegeräts eingelassenes Getriebeteil gemäß einer zweiten Ausgestaltung der Erfindung. Das Gehäuse des Getriebeteils ist in der Figur der Einfachheit halber bis auf die Lagerbuchse 9 weggelassen. Die Schnittebene verläuft durch die auf die Lagerbuchsen 9 aufgesteckten zentralen Hülsen 22 der zwei Räder 5, nicht aber durch deren von dem Zahnriemen 20 umschlungene Zahnkränze 21. Eine Spiralfeder 28 ist zwischen den beiden Rädern 5 aufgespannt und greift an deren Hülsen 22 über zwei lang gestreckte, jeweils mit einer Öse 29 versehene Bänder 30 an. Zwei lang gestreckte Blattfedern 31 sind jeweils an einem der Schraubenfeder 28 zugewandten Ende fest mit dem Gehäuse verbunden, und ein freies Ende der Blattfedern 31 berührt jeweils eine der Hülsen 22. In einem Abstand von dem freien Ende tragen die Blattfedern 31 jeweils einen den Bändern 30 zugewandten Vorsprung 32.

Die in Fig. 12 gezeigte Konfiguration des Getriebeteils entspricht der hohen Stellung des an den Rädern 5 aufgehängten Abstellers 1. Um den Absteller in die niedrige Stellung zu bringen, werden die Räder 5 um circa 180° im Gegenuhrzeigersinn gedreht. Dabei wickelt sich an jedem Rad 5 das Band 30 ein Stück weit um die Hülse 22. Dabei wird die Feder 28 gespannt, und sie wird etwas gedreht, wie in Fig. 13 zu sehen. Die Dehnung der Feder 28 ist proportional zur Drehung der Räder 5, das heißt die Rückstellkraft der Feder 28 nimmt mit der Drehung der Räder gleichmäßig zu. Da kurz vor Erreichen der niedrigen Stellung die aus dem Gewicht des Abstellers und seiner Ladung resultierende Antriebskraft gegen Null geht, wird so der Absteller vor Erreichen der unteren Stellung wirksam verzögert und ein hartes Anschlagen kann vermieden werden, wenn der Absteller nicht überladen ist.

Im Laufe der Dehnung und Drehung der Feder 28 gelangen zunächst deren Bänder 30 in Kontakt mit den Vorsprüngen 32 der Blattfedern 31 und lenken diese aus. Wenn der Absteller die untere Stellung erreicht, erreichen die Ösen 29 die Vorsprünge 32, und die Vorsprünge 32 rasten in die Ösen 29 ein. Dadurch ist der Absteller in der niedrigen Stellung verriegelt; er bleibt in der niedrigen Stellung, auch wenn die Rückstellkraft der Feder 28 an sich ausreichen würde, um den Absteller wieder ein Stück weit anzuheben. Die Blattfedern 31 geben unter dem Zug der Feder 28 nicht nach, da sie von ihr im Wesentlichen in Längsrichtung beansprucht sind. Erst wenn ein Benutzer den Absteller aus der niedrigen Stellung herauszieht und dabei die Räder 5 im Uhrzeigersinn dreht, gelangen an den Hülsen 22 geformte Teile 33 in Kontakt mit den Spitzen der Blattfedern 31 und treiben diese von den Hülsen 22 fort. Dadurch werden auch die Vorsprünge 32 aus den Ösen 29 herausgezogen. Die Rückstellkraft der Schraubenfeder 28 wirkt nun wieder auf die Hülsen 22 und unterstützt das Anheben des Abstellers.

## Patentansprüche

1. Kältegerät mit einem einen Innenraum umschließenden Gehäuse und einem Absteller (1), der in dem Innenraum durch ein Getriebe (4) zwischen einer hohen und einer niedrigen Stellung verstellbar geführt ist, **dadurch gekennzeichnet, dass** dem Getriebe (4) eine die Bewegung des Abstellers (1) von der hohen in die niedrige Stellung selektiv dämpfende Bremse (15, 23) zugeordnet ist, wobei die Bremse bei einer Aufwärtsbewegung des Abstellers (1) nicht wirksam ist.

2. Kältegerät nach Anspruch 1, **dadurch gekennzeichnet, dass** die Bremse als Reibbremse ausgeführt ist.

3. Kältegerät nach Anspruch 2, **dadurch gekennzeichnet, dass** die Bremse einen ersten Bremskörper (15) und einen reibend über den ersten Bremskörper (15) bewegbaren zweiten Bremskörper (23) umfasst, die durch einen Stellkörper (10) des Getriebes (4) zwischen einer Stellung mit starkem Reibkontakt miteinander und einer Stellung mit schwachem oder keinem Reibkontakt miteinander verstellbar sind.

4. Kältegerät nach Anspruch 3, **dadurch gekennzeichnet, dass** der Stellkörper (10) an den Absteller (1) gekoppelt bewegbar ist, um bei einer Bewegung des Abstellers (1) in die niedrige Stellung den starken Reibkontakt und bei einer Bewegung des Abstellers (1) in die hohe Stellung keinen Reibkontakt herzustellen.

5. Kältegerät nach Anspruch 3 oder 4, **dadurch gekennzeichnet, dass** das Getriebe (4) ein mit dem Gehäuse und dem Absteller (1) verbundenes, die Bewegung des Abstellers (1) führendes Element (5) umfasst, dass der Stellkörper (10) in Bezug auf am Gehäuse feste Anschläge (13, 25) zwischen einer ersten und einer zweiten Anschlagstellung bewegbar ist, wobei die Drehbewegungsfreiheit des Stellkörpers (10) zwischen den Anschlagstellungen kleiner ist als die Bewegungsfreiheit des Elements (5), und dass der Stellkörper (10) in Bezug auf das Element (5) in einer schwachem oder keinem Reibkontakt entsprechenden Stellung und einer dem starken Reibkontakt entsprechenden Stellung verrastbar ist.

6. Kältegerät nach Anspruch 5, **dadurch gekennzeichnet, dass** das Element (5) zwischen der oberen und der unteren Stellung des Abstellers (1) drehbar ist.

7. Kältegerät nach Anspruch 6, **dadurch gekennzeichnet, dass** einer der Bremskörper (15) eine kreisbogenförmige Feder (15) ist und der andere Bremskörper (23) entlang einer Umfangsfläche der Feder (15) bewegbar ist.

8. Kältegerät nach Anspruch 7, **dadurch gekennzeichnet, dass** die Feder (15) an wenigstens einem Ende eine die Bewegungsfreiheit des anderen Bremskörpers (23) begrenzenden Anschlag trägt.

9. Kältegerät nach Anspruch 7 oder 8, **dadurch gekennzeichnet, dass** die Feder (15) an wenigstens einem Ende eine Rastaussparung (16, 17) aufweist, in der der andere Bremskörper (23) verrastbar ist.

10. Kältegerät nach einem der Ansprüche 7 bis 9, **dadurch gekennzeichnet, dass** die Feder (15) an einer von dem anderen Bremskörper (23) abgewandten Umfangsfläche einen Vorsprung (19) trägt, der vom Stellkörper (10) in seiner zweiten Anschlagstellung abgestützt ist.

11. Kältegerät nach einem der Ansprüche 6 bis 10, **dadurch gekennzeichnet, dass** der Stellkörper (10) eine zu seiner Drehachse konzentrische bogenförmige Feder (14) aufweist und dass die erste und zweite Raststellung definiert sind durch den Kontakt zweier Anschlagflächen der Feder (14) mit einem Rastvorsprung (24) des Elements (5).

12. Kältegerät nach einem der Ansprüche 6 bis 11, **dadurch gekennzeichnet, dass** das mit Gehäuse und Absteller (1) drehbar verbundene Element (5) ein hohles Rad ist und dass die Bremskörper (15, 23) und der Stellkörper (10) im Innern des Rads (5) untergebracht sind.

13. Kältegerät nach Anspruch 1, **dadurch gekennzeichnet, dass** die Bremse ein die Lageenergie des Abstellers (1) beim Übergang in die niedrige Stellung speicherndes und sie beim Übergang in die hohe Stellung freisetzendes Element umfasst.

14. Kältegerät nach einem der vorhergehenden Ansprüche, dadurch mehrere gekennzeichnet, dass mehrere mit Gehäuse und Absteller (1) drehbar verbundene Elemente (5) untereinander drehgekoppelt sind.

15. Kältegerät nach Anspruch 14, **dadurch gekennzeichnet, dass** zwei der Elemente (5), die an einer gleichen Seitenwand des Gehäuses angreifen, über einen Riemen (20) drehgekoppelt sind.

16. Kältegerät nach Anspruch 14 oder 15, **dadurch gekennzeichnet, dass** zwei der Elemente (5), die an entgegengesetzten Seitenwänden des Gehäuses angreifen, durch eine Stange (8) drehgekoppelt sind.

17. Kältegerät nach Anspruch 16, **dadurch gekennzeichnet, dass** die Drehachse, an der die zwei Elemente (5) an den Absteller (1) angelenkt sind, durch die Stange (8) verläuft.

## Claims

1. Refrigerating appliance with a housing enclosing an interior space and a support (1), which is guided in the interior space by a transmission (4) to be displaceable between a high and a low setting, **characterised in that** a brake (15, 23) selectively damping the movement of the support (1) from the high to the low setting is associated with the transmission (4), wherein the brake is ineffective during upward movement of the support (1).

2. Refrigerating appliance according to claim 1, **characterised in that** the brake is constructed as a friction brake.

3. Refrigerating appliance according to claim 2, **characterised in that** the brake comprises a first brake body (15) and a second brake body (23) frictionally movable over the first brake body (15), which brake bodies are adjustable by a setting body (10) of the transmission (4) between a setting with strong frictional contact with one another and a setting with weak or no frictional contact with one another.

4. Refrigerating appliance according to claim 3, **characterised in that** the setting body (10) is coupled with the support (1) to be movable in order in the case of movement of the support (1) into the low setting to produce the strong frictional contact and in the case of movement of the support (1) into the high setting to produce no frictional contact.

5. Refrigerating appliance according to claim 3 or 4, **characterised in that** the transmission (4) comprises an element (5), which is connected with the housing and the support (1) and which guides the movement of the support (1), that the setting body (10) is movable with respect to abutments (13, 25), which are fixed to the housing, between a first and a second abutment setting, wherein the freedom of movement of the setting body (10) between the abutment settings is smaller than the freedom of movement of the element (5), and that the setting body (10) is detentable with respect to the element (5) in a setting corresponding with a weak or no frictional contact and a setting corresponding with the strong frictional contact.

6. Refrigerating appliance according to claim 5, **characterised in that** the element (5) is rotatable between the upper setting and the lower setting of the support (1).

7. Refrigerating appliance according to claim 6, **characterised in that** one of the brake bodies (15) is an arcuate spring (15) and the other brake body (23) is movable along a circumferential surface of the spring (15).

8. Refrigerating appliance according to claim 7, **characterised in that** the spring (15) at at least one end carries an abutment limiting the freedom of movement of the other brake body (23).

9. Refrigerating appliance according to claim 7 or 8, **characterised in that** the spring (15) has at at least one end a detent recess (16, 17) in which the other brake body (23) is detentable.

10. Refrigerating appliance according to any one of claims 7 to 9, **characterised in that** the spring (15) carries at a circumferential surface remote from the other brake body (23) a projection (19) which is supported by the setting body (10) in its second abutment setting.

11. Refrigerating appliance according to any one of claim 6 to 10, **characterised in that** the setting body (10) has a curved spring (14) concentric with its axis of rotation and that the first and second detent settings are defined by the contact of two abutment surfaces of the spring (14) with a detent projection (24) of the element (5).

12. Refrigerating appliance according to any one of claims 6 to 11, **characterised in that** the element (5) rotatably connected with the housing and support (1) is a hollow wheel and that the brake body (15, 23) and the setting body (10) are accommodated in the interior of the wheel (5).

13. Refrigerating appliance according to claim 1, **characterised in that** the brake comprises an element storing the potential energy of the support (1) during transfer to the low setting and liberating it on transition to the high setting.

14. Refrigerating appliance according to any one of the preceding claims, **characterised in that** several elements (5) rotatably connected with the housing and support (1) are rotationally coupled with one another.

15. Refrigerating appliance according to claim 14, **characterised in that** two of the elements (5), which engage at the same side wall of the housing, are rotationally coupled by way of a belt (20).

16. Refrigerating appliance according to claim 14 or 15, **characterised in that** two of the elements (5), which engage at opposite side walls of the housing, are rotationally coupled by a rod (8).

17. Refrigerating appliance according to claim 16, **characterised in that** the axis of rotation at which the two elements (5) are articulated to the support (1) extends through the rod (8).

## Revendications

1. Appareil frigorifique comprenant un boîtier entourant un espace intérieur et comprenant un dispositif de placement (1) qui est guidé dans l'espace intérieur de manière réglable entre une position haute et une position basse au moyen d'un mécanisme de transmission, **caractérisé en ce qu'**un frein (15, 23) amortissant le mouvement du dispositif de placement (1) de manière sélective de la position haute en position basse est attribué au dispositif de transmission (4), le frein n'étant pas actif lors d'un mouvement vers le haut du dispositif de placement (1).

2. Appareil frigorifique selon la revendication 1, **caractérisé en ce que** le frein est réalisé en tant que frein à frottement.

3. Appareil frigorifique selon la revendication 2, **caractérisé en ce que** le frein comprend un premier corps de frein (15) et un deuxième corps de frein (23) déplaçable en frottant sur le premier corps de frein (15), lesquels sont réglables entre eux entre une position avec fort contact de frottement et une position avec faible contact de frottement ou aucun contact de frottement au moyen d'un corps de réglage (10) du mécanisme de transmission (4).

4. Appareil frigorifique selon la revendication 3, **caractérisé en ce que** le corps de réglage (10) est déplaçable en étant accouplé au dispositif de placement (1) afin d'établir le fort contact de frottement lors d'un mouvement du dispositif de placement (1) dans la position basse et de n'établir aucun contact de frottement lors d'un mouvement du dispositif de placement (1) dans la position haute.

5. Appareil frigorifique selon la revendication 3 ou 4, **caractérisé en ce que** le dispositif de transmission (4) comprend un élément (5) relié au boîtier et au dispositif de placement (1), guidant le mouvement du dispositif de placement (1), **en ce que** le corps de réglage (10), par rapport à des butées (13, 25) fixes sur le boîtier, est déplaçable entre une première et une deuxième positions de butée, la liberté du mouvement rotatif du corps de réglage (10) entre les positions de butée étant plus petite que la liberté de mouvement de l'élément (5), et **en ce que** le corps de réglage (10), par rapport à l'élément (5), est enclenchable dans une positon correspondant à un contact de frottement faible ou à aucun contact de frottement et dans une position correspondant au fort contact de frottement.

6. Appareil frigorifique selon la revendication 5, **caractérisé en ce que** l'élément (5) est pivotant entre la position supérieure et la position inférieure du dispositif de placement (1).

7. Appareil frigorifique selon la revendication 6, **caractérisé en ce que** l'un des corps de frein (15) est un ressort (15) en forme d'arc de cercle et **en ce que** l'autre corps de frein (23) est déplaçable le long d'une surface circonférentielle du ressort (15).

8. Appareil frigorifique selon la revendication 7, **caractérisé en ce que** le ressort (15) porte sur au moins une extrémité une butée délimitant la liberté de mouvement de l'autre corps de frein (23).

9. Appareil frigorifique selon la revendication 7 ou 8, **caractérisé en ce que** le ressort (15) présente sur au moins une extrémité un évidement d'enclenchement (16, 17) dans lequel l'autre corps de frein (23) est enclenchable.

10. Appareil frigorifique selon l'une quelconque des revendications 7 à 9, **caractérisé en ce que** le ressort (15), sur une surface circonférentielle détournée de l'autre corps de frein (23), porte une saillie (19) qui est supportée par le corps de réglage (10) dans sa deuxième position de butée.

11. Appareil frigorifique selon l'une quelconque des revendications 6 à 10, **caractérisé en ce que** le corps de réglage (10) présente un ressort (14) en forme d'arc concentrique par rapport à son axe de rotation et **en ce que** la première et la deuxième positions d'enclenchement sont définies par le contact de deux surfaces de butée du ressort (14) avec une saillie d'enclenchement (24) de l'élément (5).

12. Appareil frigorifique selon l'une quelconque des revendications 6 à 11, **caractérisé en ce que** l'élément (5) relié de manière rotative au boîtier et au dispositif de placement (1) est une roue creuse et **en ce que** les corps de frein (15, 23) et le corps de réglage (10) sont logés à l'intérieur de la roue (5).

13. Appareil frigorifique selon la revendication 1, **caractérisé en ce que** le frein comprend un élément stockant l'énergie potentielle du dispositif de placement (1) lors du passage en basse position et la libérant lors du passage en position haute.

14. Appareil frigorifique selon l'une quelconque des revendications précédentes, **caractérisé en ce que** plusieurs éléments (5) reliés de manière rotative au boîtier et au dispositif de placement (1) sont couplés entre eux par rotation.

15. Appareil frigorifique selon la revendication 14, **caractérisé en ce que** deux des éléments (5) qui ont prise sur une même paroi latérale du boîtier sont couplés par rotation par l'intermédiaire d'une courroie (20).

16. Appareil frigorifique selon la revendication 14 ou 15, **caractérisé en ce que** deux des éléments (5) qui ont prise sur des parois latérales opposées du boîtier sont couplés par rotation par l'intermédiaire d'une tige (8).

17. Appareil frigorifique selon la revendication 16, **caractérisé en ce que** l'axe de rotation, sur lequel les deux éléments (5) sont articulés sur le dispositif de placement (1), passe à travers la tige (8).
